# EUROPEAN PATENT APPLICATION

(11) **EP 1 835 005 A1**
(43) Date of publication of application: **19.09.2007**
(21) Application number: 07005366.5
(22) Date of filing: 15.03.2007
(51) Int. Cl.: C09K 3/00, C09K 3/18

(54) **Stainproof part and fog-resistant part**

(30) Priority: 17.03.2006 JP 2006074830
(71) Applicant: FUJIFILM Corporation, Minato-ku Tokyo (JP)
(72) Inventor: Shimada, Kazuto, Haibara-gun Shizuoka-ken (JP); Hoshi, Satoshi, Haibara-gun Shizuoka-ken (JP)
(74) Representative: HOFFMANN EITLE

(57) **Abstract**

A stainproof part and a fog-resistant part including a crosslinked hydrophilic film prepared by forming a film on a substrate from a hydrophilic film-forming composition containing a crosslinking agent and a hydrophilic polymer having a crosslinkable group at one terminal, and hardening the film by heat or light.

In a favorable embodiment, multiple, at least mutually-reactive crosslinking agents are used as the crosslinking agent, and at least one of the multiple crosslinking agents has a functional group that can form a covalent bond and/or ionic bond with the hydrophilic polymer having a crosslinkable group at one terminal.

## Description

### Background of the Invention

### Field of the Invention

The present invention relates to a stainproof part and a fog-resistant part prepared by forming a crosslinked hydrophilic film, superior in stainproofing and fog resistance properties, and that has favorable abrasion resistance, on the surface of various base materials.

### Description of the Related Art

Various methods of preventing the deposition of oil stains on the surface of parts have been proposed. In particular, there exists a need for an effective method of preventing staining on optical parts such as antireflective films, optical filters, optical lenses, spectacle lenses and mirrors that are easily stained by people, for example, with stains such as fingerprint, sebum, perspiration, and cosmetics, causing functional deterioration. Such parts are preferably stain proofed because stain removal is laborsome. Due to the recent increasing popularity of mobile devices, display devices are increasingly used outdoors, but, when such a device is used in an external-light environment, incident beams are reflected regularly on the display surface, causing the problem of reflected light mixing with the displayed light, making displayed light less visible. For this reason, an antireflective optical part is often placed on the display surface. Examples of known antireflective optical parts include: laminates of high- and low-refractive-index films formed on a transparent base material, single low-refractive-index films of an organic compound fluoride or the like formed on the surface of a transparent base material, coat films containing transparent fine particles formed on the surface of a transparent plastic film base material and surface-roughened for diffuse reflection of external light, and the like. The surfaces of these antireflective optical parts are also easily stained with fingerprints, sebum or the like through usage by people, in a similar way to the optical parts described above, causing problems, namely, that the stained regions are more visible because they are more reflective, and that the stain is more difficult to remove because the surface of such an antireflective film is usually very finely irregular.

Various methods of preventing surface staining of solid parts and forming a surface having a stain-preventing function allowing easier removal of the stains deposited have been proposed. Examples of combinations of an antireflective part and a stainproof part are a combination of an antireflective film mainly containing silicon dioxide and a stainproof friction-resistant material treated with a compound having an organic silicon substituent group (see, for example, Japanese Patent Application Laid-Open (JP-A) No. 64-86101) and a stainproof, friction-resistant CRT filter having a base material surface treated with a terminal-silanol organic polysiloxane (see, for example, JP-A No. 4-338901). Antireflective films containing a silane compound, for example, a silane compound containing a polyfluoroalkyl group (see, for example, Japanese Patent Application Publication (JP-B) No. 6-29332) and combinations of an optical thin film mainly containing silicon dioxide with a copolymer of a perfluoroalkyl acrylate and an alkoxysilane group-containing monomer (see, for example, JP-A No. 7-16940) have also been proposed.

However, stainproof films formed by conventional methods are not sufficiently stainproof, and in particular, stains such as fingerprints, sebum, perspiration, and cosmetics are difficult to remove. Additionally, there are concerns about the long-tem stainproofing efficacy of surface treatment with a low-surface-energy material such as fluorine or silicon, and thus there exists a need for the development of a stainproof part superior in stainproof efficiency and durability.

Resin films, and inorganic materials such as glass and metal commonly used for the surface of optical parts, are generally weakly hydrophobic or slightly hydrophilic on the surface. When the surface of a base material of a resin film or an inorganic material is hydrophilized, water droplets deposited spread on the surface of the base material, forming a uniform water film, and this, surface hydrophilization prevents clouding on glass, lenses, and mirrors effectively and is also effective in preventing clouding by water vapor and helps to sucure visibility in rain. Surface hydrophilization also makes surfaces resistant to deposition of hydrophobic contaminants including smoke, dust, combustion products such as carbon black (contained in exhaust gases for example from vehicles, oils, sealant elution components, and the like), and also makes any stains, if deposited, easily removable in rain or by washing with water, making hydrophilized parts useful in various applications.

Traditional surface hydrophilization treatment methods, such as etching and plasma treatments, are effective for hydrophilization, but the effect is only temporary, and it is not possible to maintain the hydrophilized state for an extended period of time. Films surface-hydrophilized with a hydrophilic resin, known as hydrophilic graft polymer, have also been proposed (see, for example, "The Chemical Daily", Jan. 30, 1995), but in this case the film is not sufficiently compatible with the base material and not sufficiently durable, although it is hydrophilic to some extent.

Titanium oxide-containing films are known as films superior in surface hydrophilicity, and methods of making surfaces highly hydrophilic by, for example, photoexcitation of a photocatalyst contained in a photocatalyst-containing layer formed on the base material surface have also been disclosed. It is reported that application of this technology to various composite materials including glass, lenses, mirrors, exterior materials, and plumbing materials has been effective in providing these composite materials with superior stainproofing properties (see, for example, International Publication (WO) /1996/029375). However, hydrophilic films containing titanium oxide have disadvantages, in that they do not have sufficiently high film strength and their use is restricted, because they do not exhibit a hydrophilizing effect unless photoexcited, and thus, there is a need for a long-lasting stainproof part with favorable abrasion resistance.

An object of the invention, which was made in view of the problems above, is to provide a stainproof part and a fog-resistant part, that are prepared by forming a crosslinked hydrophilic film superior in stainproofing and fog resistance and having favorable abrasion resistance, on various base material surfaces.

### Summary of the Invention

The present invention has been made in view of the above circumstances and provides a stainproof part and a fog-resistant part.

A first aspect of the invention provides a stainproof part, comprising a crosslinked hydrophilic film prepared by forming a film with a hydrophilic film-forming composition containing a hydrophilic polymer having a crosslinkable group at one terminal and a crosslinking agent on a substrate and hardening the film by heat or light.

A second aspect of the invention provides a fog-resistant part, comprising a crosslinked hydrophilic film prepared by forming a film with a hydrophilic film-forming composition containing a hydrophilic polymer having a crosslinkable group at one terminal and a crosslinking agent on a substrate and hardening the film by heat or light.

### Detailed Description of the Invention

After intensive studies, the inventors have found that it was possible to solve the problem above by using a hydrophilic film having a crosslinked structure obtained by using a hydrophilic film-forming composition containing a particular hydrophilic crosslinkable group-containing polymer and as a stainproof and fog-resistant material, and completed the invention.

The stainproof part in a first aspect of the invention characteristically includes a crosslinked hydrophilic film prepared by forming a film on a substrate from a hydrophilic film-forming composition containing a crosslinking agent and a hydrophilic polymer having a crosslinkable group at one terminal, and hardening the film by heat or light.

The fog-resistant part in a second aspect of the invention characteristically includes a crosslinked hydrophilic film prepared by forming a film on a substrate and from a hydrophilic film-forming composition containing a crosslinking agent and a hydrophilic polymer having a crosslinkable group at one terminal, and hardening the film by heat or light.

In a favorable embodiment in forming the crosslinked hydrophilic film, multiple, at least mutually-reactive crosslinking agents are used as the crosslinking agent, and at least one of the multiple crosslinking agents has a functional group that can form a covalent bond and/or an ionic bond with the hydrophilic polymer having a crosslinkable group at one terminal.

Although the mechanism of the crosslinked hydrophilic film according to the invention showing high hydrophilicity and high strength is yet to be understood, the hydrophilic film according to the invention becomes a high-strength hydrophilic film, i.e., a high-strength three-dimensional crosslink hydrophilic film higher in crosslinking density, because a hydrophilic film is formed by using a composition containing a hydrophilic polymer having a crosslinkable group at one terminal and a crosslinking agent and hardening its film by heat and/or light. In particular, as in the preferable embodiment the invention, it is possible to increase crosslinking density and durability of the hydrophilic layer more by using multiple mutually-reactive crosslinking agents.

In forming the crosslinked hydrophilic film in the invention, one terminal of the hydrophilic polymer is fixed in the crosslinked hydrophilic film via chemical bond in reaction of the crosslinkable group, but the polymer unit carrying a hydrophilic unit, which has the other terminal not fixed to the crosslinked film, has a structure higher in the degree of freedom and superior in mobility. Accordingly, the resulting crosslinked film responds to water faster when showing it hydrophilicity and is resistant to staining, for example, by organic compounds, or shows higher affinity and response to water, and allows removal of the stains easily when water is supplied. For the same reason, the crosslinked film is more hydrophilic and allows spread of water droplets deposited in a small amount uniformly on the base material surface, easily giving a uniform water film and making the base material resistant to clouding.

The invention provides a stainproof part and a fog-resistant part of a crosslinked hydrophilic film superior in stainproofing efficiency and fog resistance and also, favorable in friction resistance that can be formed on the surface of various base materials.

The stainproof part according to the invention characteristically includes a crosslinked hydrophilic film obtained by forming a film with a hydrophilic film-forming composition containing a hydrophilic polymer having a crosslinking group at one terminal and a crosslinking agent and hardening the film by heat or light on a substrate, and the method of forming such a crosslinked hydrophilic film will be described below.

In preparing the stainproof part or the fog-resistant part according to the invention, a film is first formed on the area of a base material where the stainproof or fog-resistant surface is desirably formed with a hydrophilic film-forming composition containing a hydrophilic polymer having a crosslinkable group at one terminal and a crosslinking agent, and the method of forming the film may be any one of known methods, for example, by coating with a bar coater, spray coating, immersion of a base material in such a composition, or the like. A film is formed on the surface of a substrate base material in this way and then, hardened by heat and/or light, to give a crosslinked hydrophilic film.

Hereinafter, the method of producing the stainproof part or the fog-resistant part according to the invention will be described in detail.

### [Method of forming a crosslinked hydrophilic film]

The step of forming a crosslinked hydrophilic film is a step of forming a crosslinked hydrophilic film by applying a crosslinked hydrophilic film-forming composition containing (A) a hydrophilic polymer having a crosslinkable group at one terminal and (B) a crosslinking agent on a substrate by coating or spraying and hardening the coated film by heat or light.

Hereinafter, the components contained in the crosslinked hydrophilic film-forming composition will be described.

### <(A) Hydrophilic polymer containing a crosslinkable group at one terminal>

The hydrophilic polymer having a crosslinkable group at one terminal for use in the invention (hereinafter, referred to as "particular hydrophilic polymer") is not particularly limited, if it has a functional group reactive with a known thermal crosslinking agent at one terminal and becomes insoluble in water in reaction with the crosslinking agent. The known thermal crosslinking agents are, for example, described in "Crosslinking Agent Handbook", Shinzo Yamashita and Tosuke Kaneko, published by Taiseisha Co., Ltd. (1981).

Examples of the functional groups reactive with the crosslinking agent include carboxyl or the salt thereof, anhydrous carboxylic acid, amino, hydroxyl, epoxy, methylol, mercapto, (block) isocyanate, silanol (silane-coupling), carbon-carbon double bond, ester, tetrazole, radically polymerizable groups such as acrylate, methacrylate, and styryl, and the like.

The particular hydrophilic polymer for use in the invention may be (a) a polymer having, in its molecule, multiples of one or more kinds of hydrophilic functional groups, such as carboxyl, amino, phosphate, sulfonate, sulfinate or these salt, hydroxyl, amido, sulfonamido, alkoxy, cyano, and polyoxyethylene groups, on the side chain, or (b) a polymer having a polymer or a side chain of which the carbon atom or the carbon-carbon bond on the main chain is connected to at least one heteroatom such as oxygen, nitrogen, sulfur, or phosphorus, in which a polymer connected to the main chain or the side chain has at least one kind of hydrophilic group such as carboxyl, amino, phosphate, sulfonate, or these salt, hydroxyl, amido, sulfonamido, alkoxy, cyano, or polyoxyethylene and the polymer contains multiple pieces of such a hydrophilic functional group in the molecule.

Such a particular hydrophilic polymer should contain a crosslinkable group at least at one terminal, but may have a great number of such a hydrophilic functional group reactive with a crosslinking agent. In the invention, in forming a crosslinked hydrophilic film with the particular hydrophilic polymer, the particular hydrophilic polymer should crosslink with the crosslinking agent at one terminal and not crosslink at the other terminal, for assuring the high hydrophilicity due to high mobility of the hydrophilic polymer; and the hydrophilic functional group and present on the side chain of the hydrophilic polymer and the terminal crosslinkable group are preferably functional groups different from each other, and the terminal crosslinkable group is preferably a functional group higher in crosslinking efficiency than the side-chain functional group.

The hydrophilic polymer having a crosslinking group at one terminal favorably used in the present invention may be prepared by any one of known methods.

Examples of the methods include a method of using a chain-transfer agent such as 3-mercaptopropionic acid, 2-aminoethanethiol hydrochloride salt, 3-mercaptopropanol, or 2-hydroxyethyl disulfide, or a chain-transfer agent described in Radical Polymerization Handbook (N.T.S., Kanji Kabaike, Tsuyosi Endoh); a method of radically polymerizing a hydrophilic monomer such as acrylamide, acrylic acid, or 3-sulfopropyl methacrylate potassium salt in the presence of an iniferter described in Macromolecules, 1986, 19, p.287 (Otsu); and a method of radically polymerizing a hydrophilic monomer such as acrylamide by using no chain-transfer agent but using a radical polymerization initiator containing a crosslinkable group such as carboxyl.

The method of radical polymerization by using a chain-transfer agent is preferable, for easier control of the molecular weight of the desirable polymer.

Typical examples of the hydrophilic polymers having a crosslinkable group at one terminal include the compounds below. The number shown in each structural unit is a polymerization degree of the structural unit.

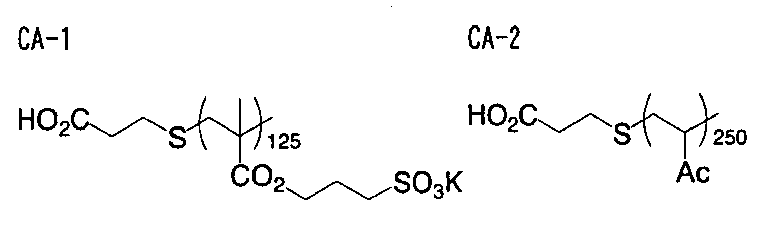

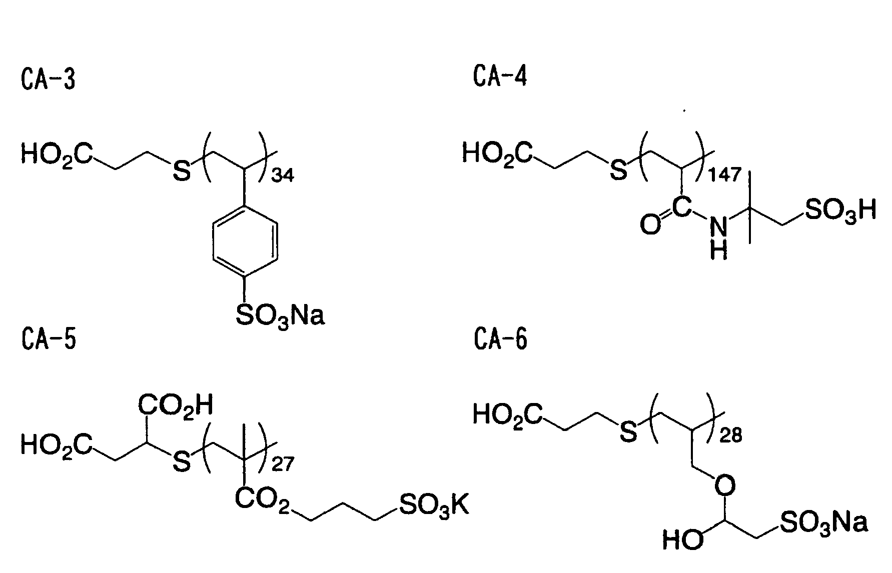

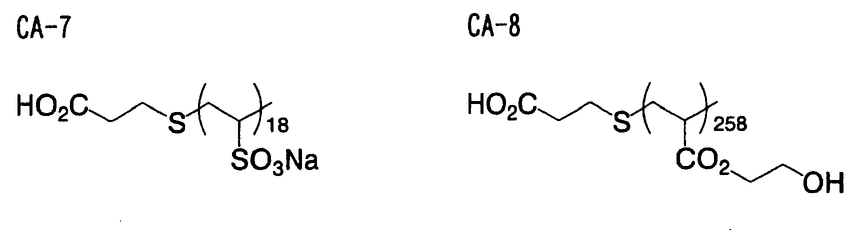

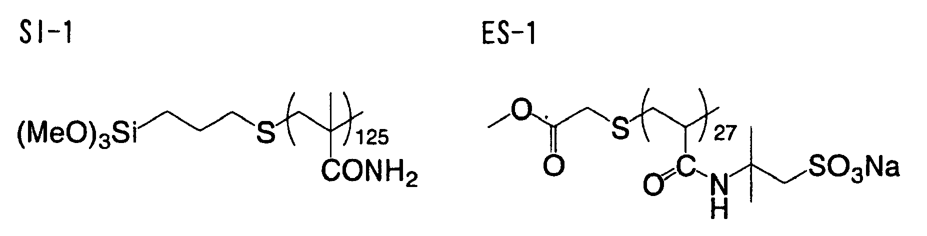

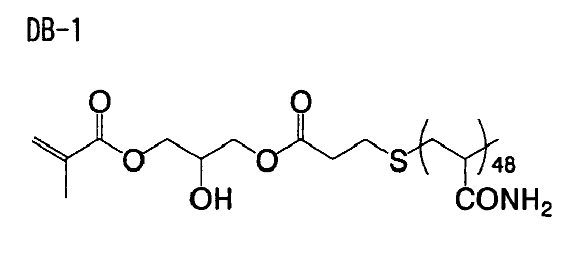

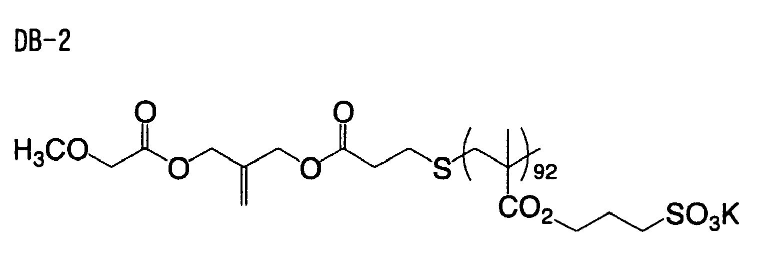

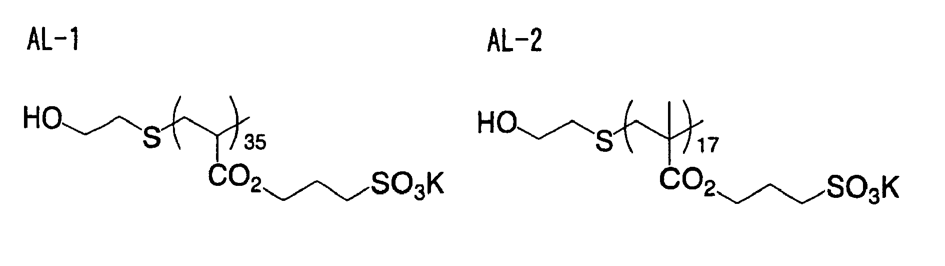

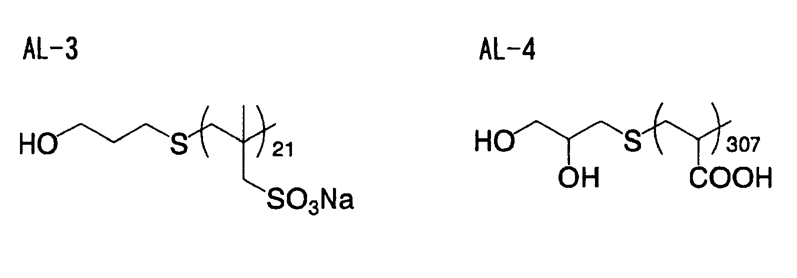

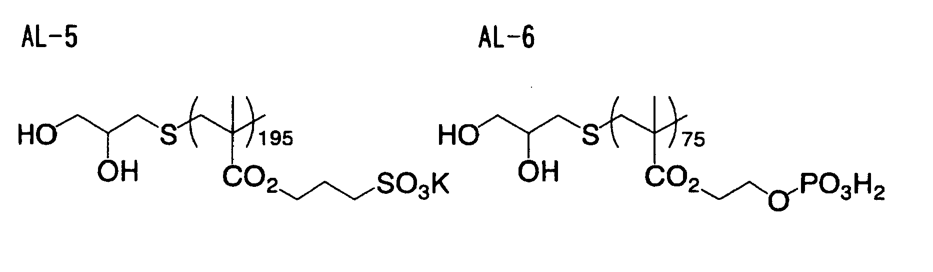

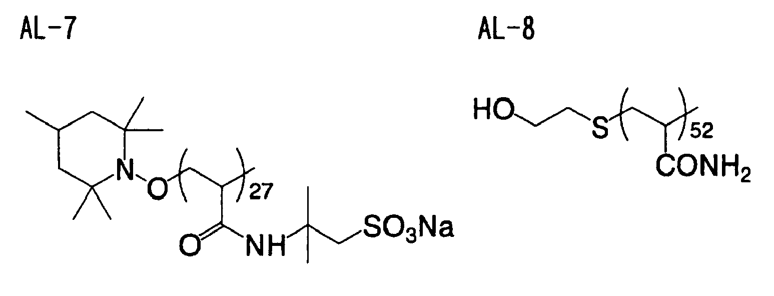

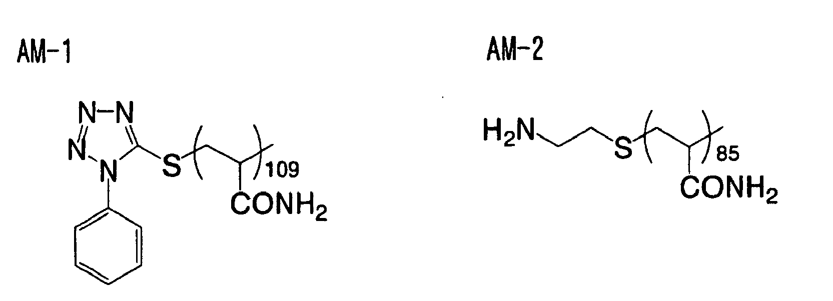

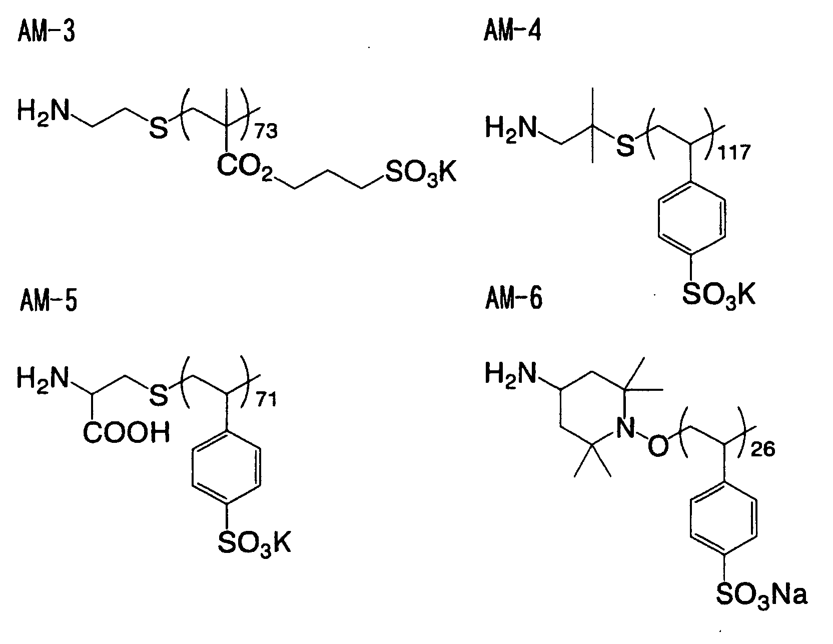

In addition, the following polymers containing a radically polymerizable group may also be used as the hydrophilic polymer having a crosslinkable group at one terminal in the invention.

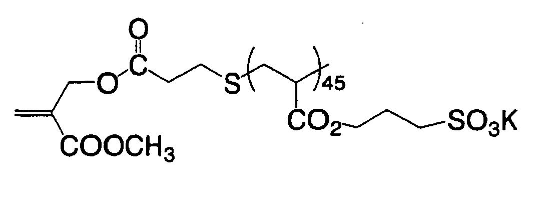

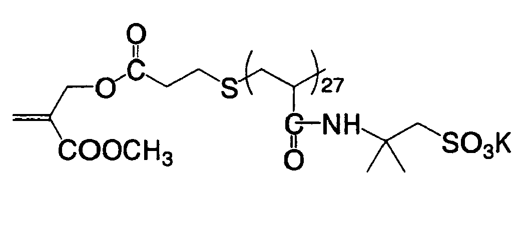

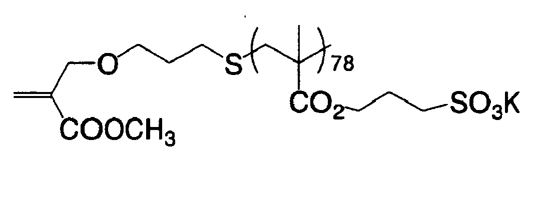

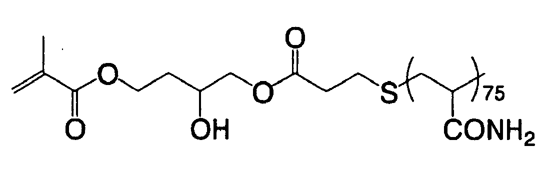

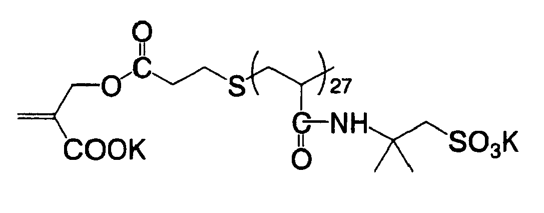

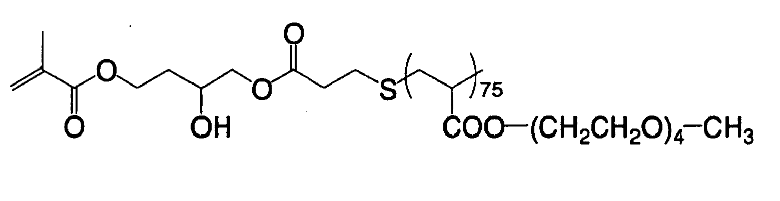

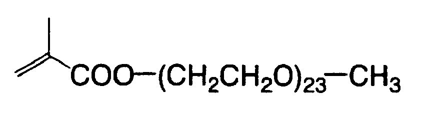

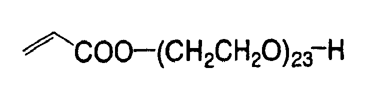

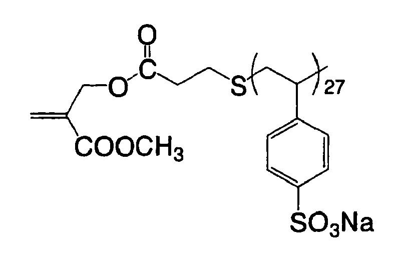

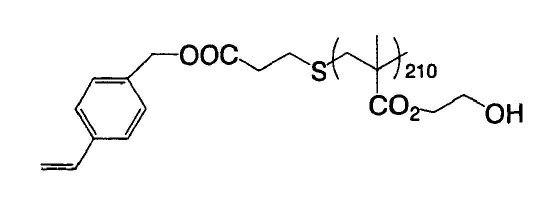

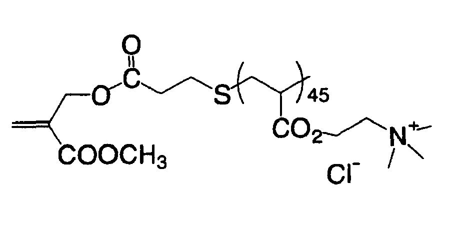

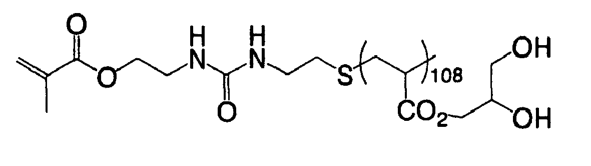

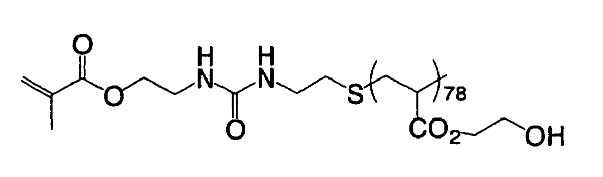

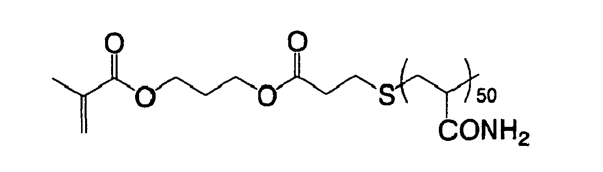

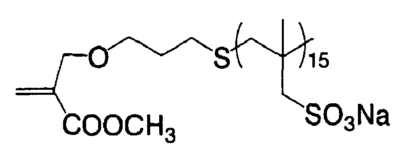

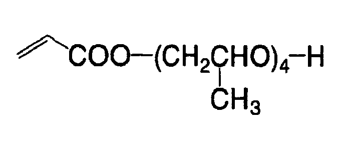

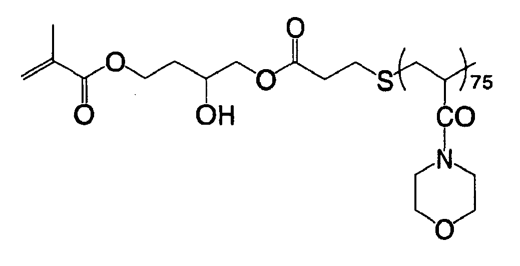

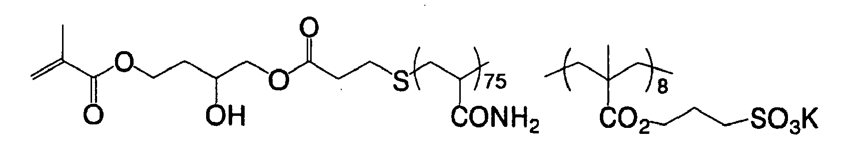

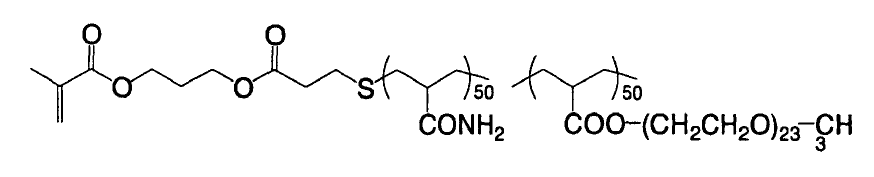

The hydrophilic polymer preferably has a weight average molecular weight of 1,000,000 or less, more preferably in the range of 1,000 to 1,000,000, and still more preferably 10,000 to 70,000. A polymer having a molecular weight of more than 1,000,000 may cause problems in handling, because it becomes less soluble in solvent during preparation of coating solution, raises the viscosity of the coating solution and does not give a uniform film easily, and is thus undesirable.

The polymer may have two or more crosslinkable groups at one terminal, and further, two or more different crosslinkable groups at one terminal.

In the invention, the content of (A) the hydrophilic polymer having a crosslinkable group at one terminal in the crosslinked hydrophilic layer-forming composition may be selected properly according to applications, but is generally, preferably 10 to 95 mass% and more preferably 45 to 90 mass%.

### < (B) Crosslinking agent >

Any one of known thermally crosslinkable crosslinking agents may be used as the crosslinking agent for use in the invention. Common thermal crosslinking agents include those described in Shinzo Yamashita and Tosuke Kaneko, "Crosslinking agent Handbook", published by Taiseisha Co., Ltd. (1981). The crosslinking agent for use in the invention is not particularly limited, if it has two or more functional groups and is effective in crosslinking the hydrophilic polymer. Typical examples of the thermal crosslinking agents include α,ω-alkane-or alkene-dicarboxylic acids such as 1,2-ethanedicarboxylic acid and adipic acid; polycarboxylic acids such as 1,2,3-propanetricarboxylic acid, 1,2,3,4-butanetetracarboxylic acid, trimellitic acid, and polyacrylic acid; amine compounds such as butylamine, spermine, diaminecyclohexane, piperazine, aniline, phenylenediamine, 1,2-ethanediamine, diethylenediamine, diethylenetriamine, and polyethyleneimine; polyepoxy compounds such as ethylene or propylene glycol diglycidylether, tetraethylene glycol diglycidylether, nonaethylene glycol diglycidylether, polyethylene or polypropylene glycol glycidylether, neopentylglycol diglycidylether, 1,6-hexanediol diglycidylether, trimethylolpropane triglycidylether, and sorbitol polyglycidylether; oligoalkylene or polyalkylene glycols such as ethylene glycol, propylene glycol, diethylene glycol, and tetraethylene glycol; polyhydroxy compounds such as trimethylolpropane, glycerol, pentaerythritol, sorbitol, and polyvinylalcohol; polyaldehyde compounds such as glyoxal and terephthalaldehyde; polyisocyanate compounds such as tolylene diisocyanate, hexamethylene diisocyanate, diphenylmethane isocyanate, xylylene diisocyanate, polymethylene polyphenyl isocyanate, cyclohexyl diisocyanate, cyclohexane phenylene diisocyanate, naphthalene-1,5-diisocyanate, isopropylbenzene-2,4-diisocyanate, and polypropylene glycol/tolylene diisocyanate adducts; blocked polyisocyanate compounds; silane-coupling agents such as tetraalkoxysilane; metal crosslinking agents such as acetylacetonates of aluminum, copper, and iron (III); polymethylol compounds such as trimethylol melamine and pentaerythritol; polythiol compounds such as dithioerythritol, pentaerythritol tetrakis(2-mercaptoacetate), and trimethylolpropane tris(2-mercaptoacetate); and the like.

Among these thermal crosslinking agents, water-soluble crosslinking agents are preferable from the viewpoints of easier in the preparation of coating solution and preventing deterioration in hydrophilicity of the hydrophilic materials prepared.

When the crosslinked hydrophilic film in the invention is formed by radical hardening, a radically polymerizable compound may be used as the crosslinking component. The radically polymerizable compound is an addition polymerizable compound having at least one ethylenic unsaturated double bond, and is selected from compounds having at least one, preferably two or more, terminal ethylenically unsaturated bond.

A group of such compounds is known widely in this industrial field, and in the invention, these compounds is not particularly limited. These compounds occur in chemical forms such as monomers, prepolymers, that is, dimers, trimers and oligomers, as well as mixtures and copolymers thereof.

Examples of such monomers and copolymers include unsaturated carboxylic acids (e.g., acrylic acid, methacrylic acid, itaconic acid, crotonic acid, isocrotonic acid, maleic acid, etc.) and esters and amides thereof. Among these compounds, esters between unsaturated carboxylic acids and aliphatic polyvalent alcohols and amides between unsaturated carboxylic acids and aliphatic polyvalent amines are preferable. Also, addition reaction products of unsaturated carboxylic esters or amides having nucleophilic substituent groups such as hydroxyl group, amino group, mercapto group, or the like with monofunctional or multifunctional isocyanates or with epoxy compounds, and dehydration condensation reaction products of unsaturated carboxylic esters or amides having nucleophilic substituent groups such as hydroxyl group, amino group, mercapto group, or the like with monofunctional or multifunctional carboxylic acids are preferably used. Further, addition reaction products of unsaturated carboxylic esters or amides having electrophilic substituent groups such as isocyanate group, epoxy group, or the like, with monofunctional or multifunctional alcohols, amines or thiols, substitution reaction products of unsaturated carboxylic esters or amides having leaving group substituent such as halogen, tosyloxy group, or the like with monofunctional or multifunctional alcohols, amines or thiols, and the like are also used. Alternatively, a group of those compounds wherein the above-described carboxylic acids are replaced with unsaturated phosphonic acids, styrene, vinyl ethers, or the like may be also used.

Specific examples of the ester monomers of aliphatic polyvalent alcohols and unsaturated carboxylic acids include as follows;

Examples of the acrylates include ethylene glycol diacrylate, triethylene glycol diacrylate, 1,3-butane diol diacrylate, tetramethylene glycol diacrylate, propylene glycol diacrylate, neopentyl glycol diacrylate, trimethylol propane triacrylate, trimethylol propane tri(acryloyloxypropyl)ether, trimethylol ethane triacrylate, hexane diol diacrylate, 1,4-cyclohexane diol diacrylate, tetraethylene glycol diacrylate, pentaerythritol diacrylate, pentaerythritol triacrylate, pentaerythritol tetracrylate, dipentaerythritol diacrylate, dipentaerythritol hexacrylate, sorbitol triacrylate, sorbitol tetracrylate, sorbitol pentacrylate, sorbitol hexacrylate, tri(acryloyloxyethyl) isocyanurate, polyester acrylate oligomers, ethyleneoxide-modified isocyanuric acid triacrylate, and the like.

Examples of the methacrylates include tetramethylene glycol dimethacrylate, triethylene glycol dimethacrylate, neopentyl glycol dimethacrylate, trimethylol propane trimethacrylate, trimethylol ethane trimethacrylate, ethylene glycol dimethacrylate, 1,3-butane diol dimethacrylate, hexane diol dimethacrylate, pentaerythritol dimethacrylate, pentaerythritol trimethacrylate, pentaerythritol tetramethacrylate, dipentaerythritol dimethacrylate, dipentaerythritol hexamethacrylate, sorbitol trimethacrylate, sorbitol tetramethacrylate, bis[p-(3-methacryloxy-2-hydroxypropoxy)phenyl]dimethyl methane, bis[p-(methacryloxyethoxy)phenyl]dimethyl methane, and the like.

Examples of the itaconates include ethylene glycol diitaconate, propylene glycol diitaconate, 1,3-butane diol diitaconate, 1,4-butane diol diitaconate, tetramethylene glycol diitaconate, pentaerythritol diitaconate, sorbitol tetraitaconate, etc. Examples of the crotonates include ethylene glycol dicrotonate, tetramethylene glycol dicrotonate, pentaerythritol dicrotonate, sorbitol tetradicrotonate, and the like.

Examples of the isocrotonates include ethylene glycol diisocrotonate, pentaerythritol diisocrotonate, sorbitol tetraisocrotonate, and the like. Examples of the maleates include ethylene glycol dimaleate, triethylene glycol dimaleate, pentaerythritol dimaleate, sorbitol tetramaleate, and the like.

Examples of other preferably used esters include aliphatic alcohol-based esters described in JP-B No. 51-47334, and JP-A No. 57-196231, those having an aromatic skeleton described in JP-A Nos. 59-5240, 59-5241 and 2-226149, and those having an amino group described in JP-A No. 1-165613. The ester monomers can also be used as a mixture.

Examples of the amide monomers of aliphatic polyvalent amine compounds and unsaturated carboxylic acids include methylene bis-acrylamide, methylene bis-methacrylamide, 1,6-hexamethylene bis-acrylamide, 1,6-hexamethylene bis-methacrylamide, diethylene triamine trisacrylamide, xylylene bisacrylamide, xylylene bismethacrylamide, and the like. Preferable examples of other amide based monomers include those having a cyclohexylene structure described in JP-B 54-21726.

Urethane based addition polymerizable compounds produced by addition reaction of isocyanate and hydroxyl groups are also preferable, and examples thereof include vinyl urethane compounds containing two or more polymerizable vinyl groups in one molecule, which are prepared by adding vinyl monomers containing a hydroxyl group shown in formula (II) below to polyisocyanate compounds having two or more isocyanate groups in one molecule as described in JP-B 48-41708.

CH₂=C (R¹) COOCH₂CH (R²) OH (I)

wherein, R¹ and R² each independently represent H or CH₃.

Urethane acrylates described in JP-A No.51-37193, JP-B No. 2-32293 and JP-B No. 2-16765 and urethane compounds having an ethylene oxide based skeleton described in JP-B No. 58-49860, JP-B No. 56-17654, JP-B No. 62-39417 and JP-B No. 62-39418 are also preferable. Further, addition polymerizable compounds having an amino or sulfide structure in the molecule as described in JP-A Nos. 63-277653, 63-260909 and 1-105238 can be used to prepare photopolymerizable compositions extremely excellent in photosensitizing speed.

Other examples include multifunctional acrylates and methacrylates such as polyesteracrylates, and epoxy acrylates obtained by reacting epoxy resin with (meth)acrylic acid as described in JP-A No. 48-64183, JP-B No. 49-43191 and JP-B No. 52-30490. Further, specific unsaturated compounds described in JP-B No. 46-43946, JP-B No. 1-40337 and JP-B No. 1-40336, and vinyl phosphonic acid-based compounds described in JP-A No. 2-25493 can also be mentioned. In some cases, a structure containing a perfluoroalkyl group described in JP-A 61-22048 is preferably used. Photocurable monomers and oligomers described in the Journal of The Adhesion Society of Japan, vol. 20, No. 7, pp. 300-308 (1984) can also be used.

Alternatively, a crosslinking agent that can be ionically bond to (A) the hydrophilic polymer having a crosslinkable group at one terminal may be used. For example, a multifunctional amine can be used as a crosslinking agent (B) when the terminal of the specific hydrophilic polymer (A) is carboxylic acid, while a carboxylic acid can be used as a crosslinking agent (B), when the terminal of the specific hydrophilic polymer (A) is amine. [Combination of (A) the hydrophilic polymer having a crosslinkable group at one terminal and (B) crosslinking agent]

Favorable combinations of the crosslinkable group in (A) the hydrophilic polymer having a crosslinkable group at one terminal and (B) the crosslinking agent for use in the invention include the followings:
A hydrophilic polymer having, at one terminal, a carboxyl group or the salt thereof can forms a three-dimensionally crosslinked network with the polyepoxy compound, polyamine compound, polymethylol compound, polyisocyanate compound, blocked polyisocyanate compound, or metal crosslinking agent described above.
A hydrophilic polymer having a methylol, phenolic hydroxyl, or glycidyl group at one terminal may forms a three-dimensionally crosslinked network, with the polycarboxylic acid compound, polyamine compound or polyhydroxy compound described above as a crosslinking agent.
A hydrophilic polymer having an amino group at one terminal may forms a three-dimensionally crosslinked network with the polyisocyanate compound or blocked polyisocyanate compound, polyepoxy compound, or polymethylol compound as a crosslinking agent.
A hydrophilic polymer having a hydroxyl group at one terminal may forms a three-dimensionally crosslinked network with the polyisocyanate or blocked polyisocyanate compound, polyaldehyde compound, polycarboxylic acid compound, or polyepoxy compound described above as a crosslinking agent.
A hydrophilic polymer having a silane coupling group such as alkoxysilyl group at one terminal may forms a three-dimensionally crosslinked network by dehydration condensation with a tetraalkoxysilane, a polyvalent alcohol, or the like.
A hydrophilic polymer having a carbon-carbon double bond at one terminal may forms a three-dimensionally crosslinked network, with a polythiol compound such as dithioerythritol, pentaerythritol tetrakis(2-mercaptoacetate), or trimethylolpropane tris(2-mercaptoacetate), an amine compound such as butylamine, spermine, diaminecyclohexane, piperazine, aniline, phenylenediamine, 1,2-ethanediamine, diethylenediamine, diethylenetriamine, or polyethyleneimine, or the like as a crosslinking agent.

In addition, a multifunctional radically polymerizable crosslinking agent and a terminal radically polymerizable hydrophilic polymer may also be used in combination.

When only one kind of crosslinking agent is used, the crosslinking agent is preferably trifunctional or higher, and it is preferable to react between the crosslinking agents. Such crosslinking agents include, for example, multifunctional epoxy compounds.

One of the crosslinking agents (B) may be used alone or two or more of the crosslinking agents may be used in combination. When two or more crosslinking agents, for example two kinds of crosslinking agents, (B-1) and (B-2), are used, preferably, one crosslinking agent (B-1) is bifunctional or higher, and the other crosslinking agent (B-2) is trifunctional or higher; and when the crosslinking agent (B-1) is bifunctional or higher, at least one functional group of crosslinking agent (B-1) is preferably reactive both with the crosslinkable group present in the terminal crosslinkable hydrophilic polymer (A) and with the crosslinking agent (B-2), and at least one other functional group in the crosslinking agent (B-1) preferably has a functional group reactive with the crosslinking agent (B-2).

The crosslinking agent (B-2) is preferably reactive both with the crosslinkable group in the terminal crosslinkable hydrophilic polymer (A) and with the crosslinking agent (B-1), or only with the crosslinking agent (B-1). The crosslinking agent (B-2) reacts only with the crosslinking agent (B-1), for example, when the crosslinkable group in the terminal crosslinkable hydrophilic polymer (A) and that of the crosslinking agent (B-2) are of the same kind.

When the crosslinkable group of the terminal crosslinkable hydrophilic polymer (A) is a radically polymerizable group, i.e., a self-hardenable functional group, the crosslinkable group of the polymer (A) and the functional group of the crosslinking agent (B) may be the same as each other. In such a case, the polymer and the crosslinking agents (B) having the same functional group may be used similarly in combination, when multiple crosslinking agents (B) are used.

In a preferable embodiment, at least two kinds of crosslinkers among a plurality of the crosslinkers are reactive with each other, and at least one kind of crosslinker among a plurality of the crosslinkers has a functional group that may forms a covalent bond with the hydrophilic polymer having a crosslinkable group at one terminal, from the viewpoint of film-forming efficiency.

In the invention, the content of the crosslinker (B) in the crosslinked hydrophilic layer-forming composition may be selected appropriately according to the purpose of application, but is preferably 5 to 95 wt %, more preferably 10 to 50 wt %, based on the solid content.

In a favorable combination of polymer (A) and crosslinker (B), the polymer (A) has, at one terminal, a carboxylic acid, a hydroxyl group, or amine group, and the crosslinker (B) is a multifunctional epoxy compound or a multifunctional carboxylic acid. Alternatively, a combination of a multifunctional amine compound and a multifunctional carboxylic acid is also favorable.

More preferable from the viewpoints of strength and hydrophilicity is a combination of a polymer (A) representing a hydrophilic polymer having a carboxylic acid group at the terminal, a first crosslinking agent (B-1) representing a compound having an bifunctional or higher epoxy group, and a second crosslinking agent (B-2) representing a polymer compound having a molecular weight of 1,000 or more and containing a carboxylic acid group.

Another preferable combination is a combination of a polymer (A) representing a hydrophilic polymer having a carboxylic acid group at the terminal, a first crosslinking agent (B-1) representing a bifunctional or higher amino group-containing compound, and a second crosslinking agent (B-2) representing a polymer compound having a molecular weight of 1,000 or more and containing carboxylic acid group.

Also favorable is a combination of a polymer terminal (A) representing an ethylenic unsaturated group and a first crosslinking agent (B-1) representing an ethylenic unsaturated group-containing compound.

Two or more polymers (A) or two or more crosslinking agents (B) may be used in combination as needed.

### <Surfactant>

In the invention, a surfactant is used preferably in the crosslinked hydrophilic film forming composition in order to promote in-machine developability upon initiation of printing and to improve the coated surface property. Examples of the surfactant include a nonionic surfactant, anionic surfactant, cationic surfactant, amphoteric surfactant and fluorine-based surfactant. One of the surfactants may be used alone or two or more thereof may be used in combination.

The nonionic surfactant used in the invention is not particularly limited, and a conventionally known nonionic surfactant can be used. Examples of the nonionic surfactant include polyoxyethylene alkyl ethers, polyoxyethylene alkyl phenyl ethers, polyoxyethylene polystyryl phenyl ethers, polyoxyethylene polyoxypropylene alkyl ethers, partial esters of glycerin with fatty acid, partial esters of sorbitan with fatty acid, partial esters of pentaerythritol with fatty acid, esters of propylene glycol with monofatty acid, partial esters of sucrose with fatty acid, partial esters of polyoxyethylene sorbitan with fatty acid, polyethylene glycol fatty acid esters, partial esters of polyglycerin with fatty acid, polyoxyethylene castor oil, partial esters of polyoxyethylene glycerin with fatty acid, fatty acid diethanol amides, N,N-bis-2-hydroxyalkyl amines, polyoxyethylene alkyl amine, triethanol amine fatty acid ester, trialkyl amine oxide, polyethylene glycol, and a polyethylene glycol/polypropylene glycol copolymer.

The anionic surfactant used in the invention is not particularly limited, and a conventionally known anionic surfactant can be used. Examples of the anionic surfactant include aliphatic acid salts, abietates, hydroxyalkane sulfonates, alkane sulfonates, dialkylsulfosuccinates, linear alkyl benzene sulfonates, branched alkyl benzene sulfonates, alkyl naphthalene sulfonates, alkyl phenoxy polyoxyethylene propyl sulfonates, polyoxyethylene alkyl sulfophenyl ether salts, sodium N-methyl-N-oleyl taurates, disodium N-alkyl sulfosuccinic monoamide salt, petroleum sulfonates, sulfuric acid tallow oil, fatty alkyl sulfates, alkyl sulfates, polyoxyethylene alkyl ether sulfates, fatty monoglyceride sulfates, polyoxyethylene alkyl phenyl ether sulfates, polyoxyethylene styryl phenyl ether sulfates, alkyl phosphates, polyoxyethylene alkyl ether phosphates, polyoxyethylene alkyl phenyl ether phosphates, partially saponified styrene/maleic anhydride copolymers, partially saponified olefin/maleic anhydride copolymers and condensates of naphthalene sulfonate and formalin.

The cationic surfactant used in the invention is not particularly limited, and a conventionally known cationic surfactant can be used. Examples of the cationic surfactant include alkyl amine salts, quaternary ammonium salts, polyoxyethylene alkyl amine salts and polyethylene polyamine derivatives.

The amphoteric surfactant used in the invention is not particularly limited, and a conventionally known amphoteric surfactant can be used. Examples of the amphoteric surfactant include carboxy betaines, aminocarboxylic acids, sulfobetaines, aminosulfates and imidazolines.

The term "polyoxyethylene" in the surfactants described above can be read as "polyoxyalkylene" such as polyoxymethylene, polyoxypropylene, polyoxybutylene, etc., and these surfactants can also be used in the invention.

Further preferable surfactants are fluorine-based surfactants containing a perfluoroalkyl group in their molecule. Such fluorine-based surfactants include anionic surfactants such as perfluoroalkyl carboxylates, perfluoroalkyl sulfonates and perfluoroalkyl phosphates, amphoteric surfactants such as perfluoroalkyl betaine, cationic surfactants such as perfluoroalkyl trimethyl ammonium salts, and nonionic surfactants such as perfluoroalkyl amine oxide, perfluoroalkyl ethylene oxide adducts, perfluoroalkyl group- or hydrophilic group-containing oligomers, perfluoroalkyl group- or lipophilic group-containing oligomers, perfluoroalkyl group-, hydrophilic group- or lipophilic group-containing oligomers, and perfluoroalkyl group- or lipophilic group-containing urethane. Preferable examples also include fluorine-based surfactants described in JP-A Nos. 62-170950, 62-226143 and 60-168144.

The surfactants can be used alone or two or more thereof can be used in combination.

The content of surfactant is preferably in an amount of 0.001 to 10% by mass, and more preferably 0.01 to 5% by mass, based on the total solid content of the image recording layer.

### <Colarant>

To the crosslinked hydrophilic film forming composition in the invention, various compounds other than the above-mentioned compounds may be added if necessary. For example, dyes having large absorption band in the visible spectrum can be used as colarants for images. Specific examples thereof include Oil Yellow #101, Oil Yellow #103, Oil Pink #312, Oil Green BG, Oil Blue BOS, Oil Blue #603, Oil Black BY, Oil Black BS, Oil Black T-505 (which are available from Orient Chemical Industries, Ltd.), Victoria Pure Blue, Crystal Violet (CI42555), Methyl Violet (CI42535), Ethyl Violet, Rhodamine B (CI145170B), Malachite Green (CI42000), Methylene Blue (CI52015), and dyes described in JP-A No. 62-293247. Pigments such as phthalocyanine pigment, azo pigment, carbon black and titanium oxide can also be preferably used. These colorants can be used when the film is desirably colored, for example, for making the stainproof or fog-resistant part superior in design and appearance or for light-screening of the area where the part is placed.

The addition amount of the colorant when used is preferably 0.01 to 10 mass % with respect to the total solid in the film-forming composition.

### <Formation of crosslinked hydrophilic film>

The crosslinked hydrophilic film according to the invention is prepared by preparing a crosslinked hydrophilic film-forming composition by dissolving or dispersing desirable components in a solvent and coating it on a suitable substrate.

Examples of the solvents for use then include, but are not limited to, ethylene dichloride, cyclohexanone, methylethylketone, methanol, ethanol, propanol, ethylene glycol monomethylether, 1-methoxy-2-propanol, 2-methoxyethyl acetate, 1-methoxy-2-propyl acetate, dimethoxyethane, methyl lactate, ethyl lactate, N,N-dimethylacetamide, N,N-dimethylformamide, tetramethylurea, N-methylpyrrolidone, dimethylsulfoxide, sulfolane, γ-butyllactone, toluene, water, and the like. These solvents are used alone or as a mixture. The solid matter concentration of the coating solution is preferably 1 to 50 mass %.

The crosslinked hydrophilic film according to the invention may be formed by preparing multiple coating solutions by dissolving the same or different components respectively in the same or different solvents and repeating application and drying of the respective coating solutions multiple times.

The amount of the crosslinked hydrophilic film formed on the substrate after coating and drying (solid matter) may vary according to applications, but is generally 0.1 to 10.0 g/m², preferably 0.3 to 7.0 g/m², and still more preferably 0.5 to 5.0 g/m², and it is possible to obtain a film favorable in hydrophilicity and higher in strength in the range above.

The coating method is not limited, and various methods may be used. Examples thereof include bar coater coating, spin coating, spray coating, curtain coating, dip coating, air knife coating, blade coating, roll coating, and the like.

Crosslinking reaction proceeding after application gives a crosslinked hydrophilic film. The temperature and other conditions when the film is hardened by heat is not particularly limited, but the temperature is preferably in the range of 40°C to 300°C, more preferably 60°C to 250°C, from the viewpoints of crosslinking efficiency and production stability.

### <Substrate>

The substrate for use in the stainproof part or the fog-resistant part according to the invention is not particularly limited, if it is a dimensionally rigid plate, and is selected properly according to the installation site and application of the stainproof or fog-resistant part. Examples thereof include glass, paper, papers laminated with a plastic resin (for example, polyethylene, polypropylene, or polystyrene), metal plates (for example, aluminum, zinc, and copper), plastic films (for example, cellulose diacetate, cellulose triacetate, cellulose propionate, cellulose butyrate, cellulose acetate butyrate, cellulose nitrate, polyethylene terephthalate, polyethylene, polystyrene, polypropylene, polycarbonate, and polyvinylacetal), papers or plastic films laminated or vapor-deposited with the metal described above, and the like.

For example, the film may be used as a substrate as it is, for prevention of staining on the surface of a liquid crystal film, and the crosslinked hydrophilic film according to the invention may be formed on a substrate of a window glass or a mirror for providing the surface of the window or mirror with fog resistance. Substrates favorable for respective applications will be described below.

Favorable substrates include glass, polyester film, plastic films, and aluminum plates. Among them, glass and plastic films are favorable from the points of processability, practical performance, and application.

The thickness of the substrate is preferably 0.05 mm to 5.0 cm, more preferably 0.07 mm to 3.0 cm, and still more preferably 0.1 mm to 1.0 cm.

### [Intermediate layer]

In the stainproof part and the fog-resistant part according to the invention, an intermediate layer may be formed as needed between the crosslinked hydrophilic film and the substrate. Because the crosslinked hydrophilic film represents the outmost layer on the stainproof part or the fog-resistant part in the present invention, the crosslinked hydrophilic film preferably adheres to the substrate tightly for preservation of the stainproof efficiency and fog resistance, and thus, formation of the intermediate layer is advantageous for improvement in adhesiveness between the substrate and the crosslinked hydrophilic film.

When the substrate is a plastic film, an intermediate layer is preferably formed on the surface of the substrate by coating an acrylic, urethane-based, cellulosic, or epoxy adhesive on the substrate; or alternatively, by coating one of the undercoat layers described in JP-A Nos. 6-316183, 8-272088, 9-179311, and 2001-199175, that is an intermediate layer containing a homopolymer or copolymer of polyvinyalcohol or hydroxyalkyl acrylate or methacrylate, and hydrolyzed tetraethyl or tetramethyl orthosilicate, and favorably, additionally particles of silicon dioxide and/or titanium dioxide may be formed on the surface of the substrate.

Alternatively, when a metal substrate is used, use of an organic or inorganic resin is preferable. The organic or inorganic resin may be selected from a wide range of known hydrophobic polymers, hydrophilic polymers, and crosslinked hydrophilic polymers and inorganic polymers including sol-gel converting compounds such as hydroxyl or alkoxy group-containing aluminum, silicon, titanium, and zirconium, and the like. The preferable intermediate layer in the invention is an intermediate layer containing silica.

A hydrophilic polymer binder may be added as needed to the intermediate layer. Typical examples of the hydrophilic polymer binders include polyvinylalcohol (PVA), modified PVAs such as carboxy-modified PVA, starch and the derivatives thereof, cellulose derivatives such as carboxymethylcellulose and hydroxyethylcellulose, casein, gelatin, polyvinylpyrrolidone, vinyl acetate-crotonic acid copolymers, styrene-maleic acid copolymers, polyacrylic acid and the salts thereof, polyacrylamide, water-soluble acrylic copolymers containing a water-soluble acrylic monomer such as acrylic acid or acrylamide as a main component, and the like.

When the intermediate layer contains silica, the ratio of the hydrophilic polymer binder to silica in the intermediate layer is less than 1 based on the weight. The lower limit of the ratio is not so important, but is preferably at least 0.2. The weight ratio of the hydrophilic polymer binder to silica is still more preferably 0.25 to 0.5.

The amount of the intermediate layer coated is preferably 10 mg/m² to 5,000 mg/m², and still more preferably 50 mg/m² to 3000 mg/m².

The intermediate layer composition may be coated as an aqueous colloid dispersion in the presence of a surfactant.

Hereinafter, the stainproof part and the fog-resistant part according to the invention will be described in detail with reference to the favorable use embodiments.

### <Stainproof part>

The hydrophilic film according to the invention, when formed on the surface of a substrate for high hydrophilicity and its preservation, prevents oil staining on the part surface. Specifically when the hydrophilic film according to the invention is formed on the surface of a substrate base material to be surface-stainproofed, the high surface-hydrophilicity thereof prevents deposition of oil stains by people such as fingerprint, sebum, perspiration, cosmetics and others and oil stains generated in factories and food-processing facilities on the surface, or makes removal of the stains by wiping or washing easier even if deposited.

The stainproof part according to the invention is generally used on the surface on various optical parts such as antireflective film, optical filter, optical lens, glass lens, mirror and others.

The substrate for use in the stainproof part is not limited, and any material may be used, if the hydrophilic film according to the invention can be formed thereon.

It is preferably a transparent base material, especially when used in optical parts, and favorable examples of the materials include inorganic base materials, such as glass and glass plates having an inorganic compound layer of a metal oxide such as titanium oxide or ITO (Indium Tin Oxide) or a metal halide such as magnesium fluoride or calcium fluoride; visible-light-permeable plastics including polyolefin resins such as polyethylene and polypropylene, polyester resins such as polyethylene terephthalate and polyethylene naphthalate, poly-amide resins, polystyrene, polyvinyl chloride, polyimide, polyvinylalcohol, ethylene vinylalcohol, acrylic resin, cellulosic resins such as triacetylcellulose, diacetylcellulose, and cellophane; transparent plastic plates having an inorganic compound layer similar to that used on the glass plate above; and the like.

Such base materials favorably used for the stainproof part are described in detail in JP-A No. 2003-206472, paragraph numbers [0029] to [0036] filed by the applicant, and such a base material can be used as the base material for forming the crosslinked hydrophilic film according to the invention.

Applications of the stainproof part according to the invention include mirrors such as vehicle rear mirror, bathroom mirror, washroom mirror, dental mirror and road mirror; lenses such as glass lens, optical lens, photographic lens, endoscopic lens, illumination lens, semiconductor lens, copying machine lens; prisms, Braun tube, and the like, and applications thereof other than the optical parts above include window glasses of building and lookout tower; window glasses of automobile, train, airplane, ship, submarine, snow mobile, car gondola of ropeway, gondola of amusement park, and space ship; windshield glasses of automobile, train, airplane, ship, submarine, snowmobile, bike, car gondola of ropeway, gondola of amusement park, and spaceship; glasses of safety goggles, sporting goggles, safety mask shield, sporting mask shield, helmet shield, and frozen food showcase; cover glasses of analytical instrument, films attached on article surface, and the like.

If the stainproof part does not demand transparency, metals, ceramics, wood, stone, cement, concrete, fiber, cloth, and combinations and laminated films thereof may also be used favorably as the base materials, in addition to the transparent base materials above.

Other favorable applications include construction materials, building exterior materials, building interior materials, window frame, window glass, structural materials, vehicle exterior materials and paints, machine and article exterior materials, dustproof covers and paints, traffic sings and marks, various display devices, advertising pillar, road soundproof wall, railroad soundproof wall, bridges, guardrail exterior materials and paints, tunnel interior materials and paints, insulator, solar cell cover, solar water heater, heat-collecting cover, vinyl house, vehicle illumination light cover, house equipment, toilets, bath tub, wash stand, illumination apparatus, illumination cover, kitchenware, tableware, tableware cleaning machine, tableware dryer, sink, microwave oven, kitchen hood, ventilation fan, and films attached to the article surface, housing, parts, exterior materials and paints of home electric products, housing, parts, exterior materials and paints of OA products and the films attached to the article surface, and the like.

### <Fog-resistant part>

It is possible to provide the surface of a substrate with high hydrophilicity and its consistence, by forming the crosslinked hydrophilic film according to the invention on the substrate surface, and the fog-resistant part according to the invention effectively prevents deposition of water droplets by dewing on the part surface. Thus, even if water deposits on the surface by dewing of moisture in air under influence of temperature and humidity, the hydrophilic film having a higher hydrophilic surface allows rapid diffusion of water without forming water droplets on the surface and prevents clouding on the surface.

For that reason, the fog-resistant part according to the invention can be used favorably as an optical part such as antireflective film, optical filter, optical lens, glass lens, or mirror, or an article demanding visibility such as window or vehicle glass.

The base materials favorably used for the fog-resistant parts are the same as those for the stainproof parts described above, and applications thereof are also the same. Among the applications of the stainproof part, the fog-resistant part according to the invention is used favorably as parts demanding prevention of oil-stain deposition and also dewing by its high hydrophilicity.

### EXAMPLES

Hereinafter, the present invention will be described specifically with reference to Examples, but it should be understood that the invention is not limited thereby.

### 1. Preparative Examples of hydrophilic polymer having a crosslinkable group at one terminal (Preparative Example 1: Preparation of terminal-carboxylic acid hydrophilic polymer CA-1)

147.8 g of 3-sulfopropyl methacrylate ester potassium salt, 3.82 g of mercaptopropionic acid, 0.582 g of polymerization initiator VA-044, manufactured by Wako Pure Chemical Industries, were dissolved in 151.5 g of water; the aqueous solution obtained was added dropwise into 151.5 g of water kept at 50°C in air over 2 hours, and, after dropwise addition, the mixture was stirred under heat at 50°C for 2 hours and at 60°C for 2 hours; after cooling, the solution was added dropwise gradually into 4.5 L of acetone, to give white solid precipitate.

The solid obtained was filtered and dried, to give a polymer CA-1 (145 g). The acid value after drying was 0.086 meq/g.

### (Preparative Example 2: Preparation of terminal-carboxylic acid hydrophilic polymer CA-3)

4-Styrenesulufonic acid sodium salt: 30 g and 3-mercaptopropionic acid: 3.8 g were dissolved in ethanol:70 g; the solution was heated to 60°C under a nitrogen environment; a thermal polymerization initiator of 2,2-azobisisobutyl nitrile (AIBN):300 mg was added and allowed to react for 6 hours. After reaction, the resulting white precipitate was filtered and washed thoroughly with methanol, to give a terminal-carboxylic acid polymer CA-3: 30.8 g (acid value: 0.787 meq/g and molecular weight: 1.29×10³).

### (Preparative Example 3: Preparation of amide macromonomer A-1)

Acrylamide: 30 g and 3-mercaptopropionic acid: 3.8 g were dissolved in ethanol: 70 g; the solution was heated to 60°C under a nitrogen atmosphere; and a thermal polymerization initiator of 2,2-azobisisobutyl nitrile (AIBN): 300 mg was added thereto and allowed to react for 6 hours. After reaction, the white precipitate was filtered and washed thoroughly with methanol, to give a terminal carboxylic acid prepolymer: 30.8 g (acid value: 0.787 meq/g and molecular weight: 1.29×10³). The prepolymer obtained: 20 g was dissolved in dimethylsulfoxide: 62 g; glycidyl methacrylate: 6.71 g, N,N-dimethyldodecylamine (catalyst): 504 mg, and hydroquinone (polymerization inhibitor): 62.4 mg were added thereto and allowed to react under a nitrogen atmosphere at 140°C for 7 hours. The reaction solution was added into acetone, allowing precipitation of the polymer, and the polymer was washed thoroughly, to give a terminal-methacrylate acrylamide macromonomer (A-1): 23.4 g (weight-average molecular weight: 1,400). Methacryloyl group olefin peaks in ¹H-NMR (D₂O) at 6.12 and 5.70 ppm and decrease in acid value (0.057 meq/g) indicated that the polymerizable group was introduced to the terminal.

### (Preparative Example 4: Preparation of sulfonic acid macromonomer S-1)

3-Sulfopropyl methacrylate ester potassium salt: 147.8 g, mercaptopropionic acid: 3.82 g, and polymerization initiator VA-044: 0.582 g, manufactured by Wako Pure Chemical Industries were dissolved in water: 151.5 g; the aqueous solution obtained was added dropwise into water kept at 50°C: 151.5 g under a nitrogen environment over a period of 2 hours; after dropwise addition, the mixture was stirred at 50°C for 2 hours and at 60°C for 2 hours, and, after cooling, added dropwise into acetone: 4.5 L, to give white solid precipitate.

The solid obtained was filtered and dried, to give a polymer A: 145 g. The acid value after drying was 0.086 meq/g.

Polymer A: 80 g was dissolved in acetone/water (1/2 by volume) solvent: 240 g; α-bromomethyl methacrylate: 6.17 g and triethylamine: 3.48 g were added thereto; and the mixture was stirred at room temperature for 10 hours. After stirring, the solution was added dropwise into acetone: 4 L, to give white solid precipitate. The solid obtained was filtered and dried, to give a polymer (S-1):82 g. The acid value was 0.004 meq/g; double bond-derived peaks in H-NMR (D₂O) at around 6.36 and 6.90 ppm indicated that the polymerizable group was introduced to the terminal.

### (2) Formation of crosslinked hydrophilic film

### (Preparation of stainproof part and fog-resistant part)

### (Example 1)

A hydrophilic film-forming composition in the following composition was bar-coated on a base material glass plate (manufactured by Endo Scientific Instrument) and dried at 140°C for 10 minutes in an oven, to give a stainproof, fog-resistant part of crosslinked hydrophilic film having a dry coating amount of 1.8 g/m².
Hydrophilic film-forming composition (1)
- Water 100 g
- Particular hydrophilic polymer CA-1 (obtained in Preparative Example 1) 4.1 g
- Following crosslinking agent (1) 2.5 g
- Following crosslinking agent (2) 2.0 g
- Surfactant (diethylhexyl sulfosuccinate, sodium salt) 0.2 g

### Crosslinking agent (1)

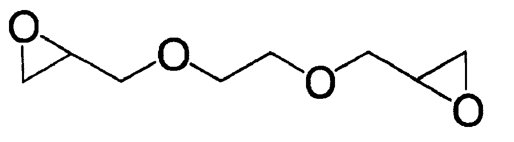

### Crosslinking agent (2)

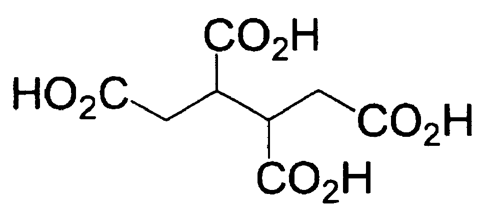

### (Examples 2 to 7)

Stainproof and fog-resistant parts of crosslinked hydrophilic film were prepared in a similar manner to Example 1, except that the hydrophilic polymer and the crosslinking agent used in Example 1 were replaced with the compounds shown in the following Table 1.

**[Table 1]**

| | Hydrophilic polymer | Crosslinking agent |
|---|---|---|
| Example 1 | CA-1 | Crosslinking agent (1)/ Crosslinking agent (2) |
| Example 2 | CA-1 | Crosslinking agent (3)/ Crosslinking agent (4) |
| Example 3 | CA-1 | Crosslinking agent (1)/ polyacrylic acid (Mw: 5,000) |
| Example 4 | CA-3 | Crosslinking agent (1)/ Crosslinking agent (4) |
| Example 5 | CA-3 | Crosslinking agent (3)/ Crosslinking agent (2) |
| Example 6 | AM-7 | Crosslinking agent (3)/ polyacrylic acid(Mw=10,000) |
| Example 7 | AL-9 | Crosslinking agent (3)/ polyacrylic acid (Mw=10,000) |

The structures of the crosslinking agents (3) and (4) and the particular hydrophilic polymers CA-4 and CA-5 shown in Table 1 are shown below. These particular hydrophilic polymers can be prepared in a similar manner to the particular hydrophilic polymer CA-1.

### Crosslinking agent (3)

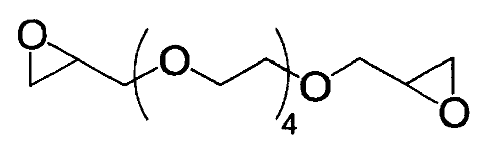

### Crosslinking agent (4)

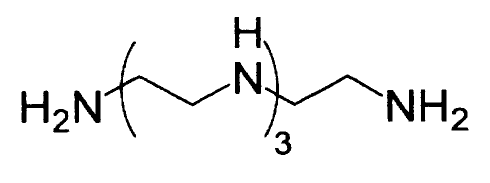

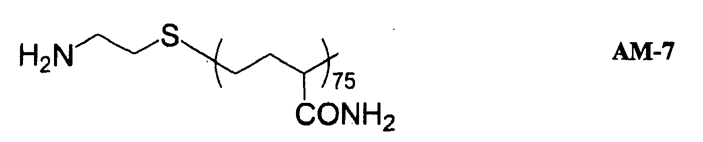

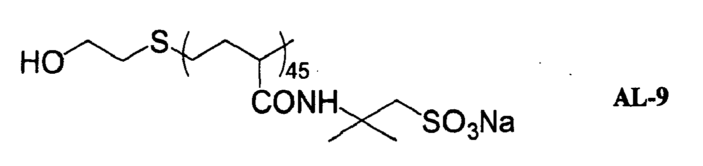

### (Comparative Example 1)

A stainproof and fog-resistant part of crosslinked hydrophilic film was formed in a similar manner to Example 1, except that the particular hydrophilic polymer CA-1 used in Example 1 was replaced with acrylic acid/acrylamide (50/50, Mw: 70,000).

### (Example 8)

### Hydrophilic film-forming composition (2)

- Particular hydrophilic polymer A-1 (obtained in Preparative Example 3) 4 g
- Ethoxylated trimethylolpropane acrylate 2.7 g (manufactured by Nippon Kayaku SR-9035)
- Irgacure 2959 (manufactured by Ciba-Geigy Corp.) 0.5 g
- Water 100 g

### [Preparation of stainproof and fog-resistant part]

The hydrophilic film-coating solution composition (2) above was coated on the glass plate described above (substrate) to a dry coating amount of 1 g/m² and dried at 120°C for 2 minute, to form a crosslinked hydrophilic film on the substrate.

The substrate carrying the crosslinked hydrophilic film was placed in a vat, which was then sealed with Forwrap (manufactured by Riken Technos Corp.) on the top face; after substitution with nitrogen, the plate was irradiated with a 400 W high-pressure mercury lamp (UVL-400P, manufactured by Riko Kagaku Sangyo Co., Ltd.) for 10 minutes. The substrate carrying the hydrophilic hardened film obtained was immersed in and washed thoroughly with ion-exchange water, dried at 100°C for 1 minute, for acceleration of crosslinking of the hydrophilic film, to give a stainproof and fog-resistant part.

### (Example 9)

A stainproof and fog-resistant part of crosslinked hydrophilic film was formed in a similar manner to Example 8, except that the particular hydrophilic polymer A-1 used in Example 8 was replaced with the particular hydrophilic polymer S-1 (obtained in Preparative Example 4) and that the substrate used in Example 8 was replaced with a polyester film.

### (Comparative Example 2)

A stainproof and fog-resistant part of crosslinked hydrophilic film was formed in a similar manner to Example 8, except that the particular hydrophilic polymer A-1 used in Example 8 was replaced with the following polymer having multiple crosslinkable groups on the side chain.

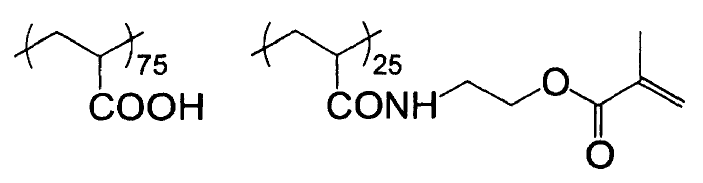

### (Evaluation of stainproof part and fog-resistant part)

### (Evaluation of wear resistance)

The surface of each of the stainproof and fog-resistant parts obtained Examples 1 to 9 and Comparative Examples 1 and 2 was rubbed with a nonwoven fabric (BEMCOT, manufactured by Asahi Kasei Corp.) 100 times, and the contact angles thereof before and after rubbing (water contact angle in air) were determined by using Drop Master 500 manufactured by Kyowa Interface Science Co., Ltd., and the friction resistance was evaluated, according to the criteria below. Results are summarized in the following Table 2. As shown in the following evaluation criteria, a part showing smaller change in contact angle between before and after rubbing was regarded as superior in durability without deterioration in hydrophilicity.
G1: Change of contact angle between before and after rubbing: 1°
G2: 1° or more and 2° or less
G3: 2° or more

### [Evaluation of fog resistance]

Each of the stainproof and fog-resistant parts obtained above was exposed to steam under a daytime indoor fluorescent lamp for one minute; after separation from steam, the parts were placed in an environment at 25°C and a RH of 10%; the degree and the change of cloudiness was grouped sensorily into three ranks according to the following criteria, under a fluorescent lamp in the irradiation condition similar to that above. Results are summarized in the following Table 2.
G1: No clouding observed
G2: Clouded, but the cloudiness disappeared in 10 seconds or less
G3: Clouded, and the cloudiness remained even after 10 seconds

### (Evaluation of stainproof efficiency)

A line was drawn on the surface of each of the stainproof and fog-resistant parts obtained above with oil ink (Oil Marker, manufactured by Mitsubishi Pencil Co., Ltd.), and removal of the line when water was sprayed continuously was evaluated sensorily. Results are summarized in the following Table 2.
G1: Ink removed in 1 minute
G2: Ink removed after 1 minute
G3: Ink remained after 2 to 10 minutes

**[Table 2]**

| | Evaluation results | | |
|---|---|---|---|
| | wear resistance | Stainproof efficiency | Fog resistance |
| Example 1 | G1 | G1 | G1 |
| Example 2 | G1 | G1 | G1 |
| Example 3 | G1 | G1 | G1 |
| Example 4 | G1 | G1 | G1 |
| Example 5 | G1 | G1 | G1 |
| Example 6 | G1 | G1 | G1 |
| Example 7 | G1 | G1 | G1 |
| Example 8 | G1 | G1 | G1 |
| Example 9 | G1 | G1 | G1 |
| Comparative Example 1 | G1 | G3 | G3 |
| Comparative Example 2 | G1 | G3 | G3 |

As apparent form Table 2, the stainproof fog-resistant parts obtained in Examples 1 to 9 were superior in surface hydrophilicity and its durability, reduced deposition of oil stain and clouding by deposition of water droplets, and thus, had superior surface stainproof efficiency and fog resistance. On the other hand, the stainproof and fog-resistant parts of Comparative Examples 1 and 2, which were prepared with a hydrophilic polymer outside the scope of the invention, were superior in surface hydrophilic durability but still in the practically improper level in the stainproof efficiency and fog resistance.

All publications, patent applications, and technical standards mentioned in this specification are herein incorporated by reference to the same extent as if each individual publication, patent application, or technical standard was specifically and individually indicated to be incorporated by reference.

## Claims

1. A stainproof part comprising a crosslinked hydrophilic film prepared by forming a film on a substrate from a hydrophilic film-forming composition containing a crosslinking agent and a hydrophilic polymer having a crosslinkable group at one terminal, and hardening the film by heat or light.

2. The stainproof part of Claim 1, wherein the crosslinking agent includes multiple mutually-reactive crosslinking agents.

3. The stainproof part of Claim 2, wherein at least one of the multiple mutually-reactive crosslinking agents has a functional group that can form a covalent bond or an ionic bond with the hydrophilic polymer having a crosslinkable group at one terminal.

4. The stainproof part of Claim 2, wherein at least one of the multiple mutually-reactive crosslinking agents is bifunctional or higher and at least one other is trifunctional or higher.

5. The stainproof part of Claim 1, wherein the crosslinkable group of the hydrophilic polymer having a crosslinkable group at one terminal is the same as a functional group of the crosslinking agent.

6. The stainproof part of Claim 5, wherein the crosslinkable group of the hydrophilic polymer having a crosslinkable group at one terminal is an ethylenic unsaturated group and the functional group of the crosslinking agent is also an ethylenic unsaturated group.

7. The stainproof part of Claim 2, wherein the crosslinkable group of the hydrophilic polymer having a crosslinkable group at one terminal is a carboxylic acid group, a first crosslinking agent is a compound having an bifunctional or higher epoxy group, and a second crosslinking agent is a polymer compound having a molecular weight of 1,000 or more and containing a carboxylic acid group.

8. The stainproof part of Claim 2, wherein the crosslinkable group of the hydrophilic polymer having a crosslinkable group at one terminal is a carboxylic acid group, a first crosslinking agent is a bifunctional or higher amino group-containing compound, and a second crosslinking agent is a polymer compound having a molecular weight of 1,000 or more and containing a carboxylic acid group.

9. A fog-resistant part comprising a crosslinked hydrophilic film prepared by forming a film on a substrate from a hydrophilic film-forming composition containing a crosslinking agent and a hydrophilic polymer having a crosslinkable group at one terminal, and hardening the film by heat or light.

10. The fog-resistant part of Claim 9, wherein the crosslinking agent includes multiple mutually-reactive crosslinking agents.

11. The fog-resistant part of Claim 10, wherein at least one of the multiple mutually-reactive crosslinking agents has a functional group that can form a covalent bond or an ionic bond with the hydrophilic polymer having a crosslinkable group at one terminal.

12. The fog-resistant part of Claim 11, wherein at least one of the multiple mutually-reactive crosslinking agents is bifunctional or higher and at least one other is trifunctional or higher.

13. The fog-resistant part of Claim 9, wherein the crosslinkable group of the hydrophilic polymer having a crosslinkable group at one terminal is the same as a functional group of the crosslinking agent.

14. The fog-resistant part of Claim 13, wherein the crosslinkable group of the hydrophilic polymer having a crosslinkable group at one terminal is an ethylenic unsaturated group and the functional group of the crosslinking agent is also an ethylenic unsaturated group.

15. The fog-resistant part of Claim 10, wherein the crosslinkable group of the hydrophilic polymer having a crosslinkable group at one terminal is a carboxylic acid group, a first crosslinking agent is a compound having an bifunctional or higher epoxy group, and a second crosslinking agent is a polymer compound having a molecular weight of 1,000 or more and containing a carboxylic acid group.

16. The fog-resistant part of Claim 10, wherein the crosslinkable group of the hydrophilic polymer having a crosslinkable group at one terminal is a carboxylic acid group, a first crosslinking agent is a bifunctional or higher amino group-containing compound, and a second crosslinking agent is a polymer compound having a molecular weight of 1,000 or more and containing a carboxylic acid group.
